# EUROPEAN PATENT APPLICATION

(11) **EP 3 866 129 A1**
(43) Date of publication of application: **18.08.2021**
(21) Application number: 21155931.5
(22) Date of filing: 09.02.2021
(51) Int. Cl.: G07F 9/00, G06Q 30/02, G09F 23/00, G06Q 20/12, G07F 9/02

(54) **APPARATUS EQUIPPED WITH AN INTELLIGENT DISPLAY UNIT FOR THE DISPLAY AND DISTRIBUTION OF PRODUCTS IN GENERAL, IN PARTICULAR A REFRIGERATOR**

(30) Priority: 13.02.2020 IT 202000002947
(71) Applicant: TGD S.p.A., 20123 Milano (IT)
(72) Inventor: CREMASCHI, Alessandro, 27020 Travacò Siccomario (PV) (IT)
(74) Representative: Rastelli, Franco

(57) **Abstract**

Apparatus for the display and distribution of products in general, comprising a cabinet (2) for containing said products displayed for sale, equipped with a closing door (3,10) provided with a display (5,12) and with a double-glazing unit (4). The apparatus also comprises a video camera (6) for transmitting to electronics (7) user data detected by the same video camera (6), said electronics (7) sending to the aforementioned display (5,12) a specific multimedia content, formulated on the basis of said data detection performed by the video camera (6). In comparison with the known apparatuses for the display and automatic distribution of products in general, the apparatus according to the invention offers the advantage of selecting the information and messages that appear on the display according to the preferences and tastes of the user, determined based on detection of the images of the latter which are acquired through the video camera fitted on the same apparatus.

## Description

### BACKGROUND OF THE INVENTION

This invention relates to an apparatus equipped with an intelligent display unit for the display and distribution of products in general, in particular a refrigerator.

The field of the invention is that of apparatuses, for example refrigerators placed in commercial areas for sale to the public, which the customer uses by opening the door and manually picking up the product he/she wishes to purchase. However, the invention also relates to so-called "vending machines", in which distribution of the product is carried out automatically.

Commercial refrigerators are currently known that are provided with a door having a digital display which reproduces images and commercial communications intended for the public.

The main drawback of these known apparatuses is the fact that the information reproduced on the display is constant and repetitive, and does not therefore take into account the type of user and his/her purchasing preferences.

### SUMMARY OF THE INVENTION

The main purpose of this invention is to provide an apparatus equipped with an intelligent display, that is capable of adapting the information on the products offered for sale to the type of user that is preparing to purchase and to his/her preferences and tastes.

These and other objects are accomplished through the apparatus of claim 1. Preferred embodiments of the invention will be apparent from the remaining claims.

In comparison with the known apparatuses for the display and automatic distribution of products in general, the apparatus according to the invention offers the advantage of selecting the information and messages that appear on the display according to the preferences and tastes of the user, determined based on detection of the images of the latter which are acquired through the video camera fitted on the same apparatus.

According to another advantage, the apparatus of the invention allows data relating to the purchases made and divided by user type to be stored and subsequently sent to the distribution system's central server.

According to yet another advantage, the apparatus of the invention provides statistics on behavior of the different types of users who have used the apparatus, in terms of the quantities of their purchases of each of the products offered for sale.

The apparatus of the invention also has the advantage of monitoring the frequency of the users, differentiating them by gender, age, mood, buyers/non-buyers and other data.

### BRIEF DESCRIPTION OF THE DRAWINGS

These and other objects, advantages and features result from the following description of some preferred embodiments of the apparatus of the invention illustrated, by the way of non-limitative example, in the figures of the attached drawing sheets. In these:
- Figure 1 shows a first example of the apparatus of the invention in an overall perspective view;
- Figure 2 shows an exploded view of the apparatus in Figure 1;
- Figure 3 shows a second example of the apparatus of the invention in an overall perspective view;
- Figure 4 shows an exploded view of the apparatus in Figure 3; and
- Figure 5 shows a cross section of the door of the apparatus in Figure 4.

### DESCRIPTION OF THE PREFERRED EMBODIMENTS

In the following description and the attached figures, reference is made to a refrigerator intended for the sale of food products stored inside it, from which the customer serves him/herself by opening the door and manually picking up the product he/she wishes to purchase. However, it must be understood that the invention is not limited to this type of apparatus, but also applies to so-called "vending machines", in which the distribution of food and non-food products is carried out automatically to a public that normally frequents shopping malls, shops, offices and the like.

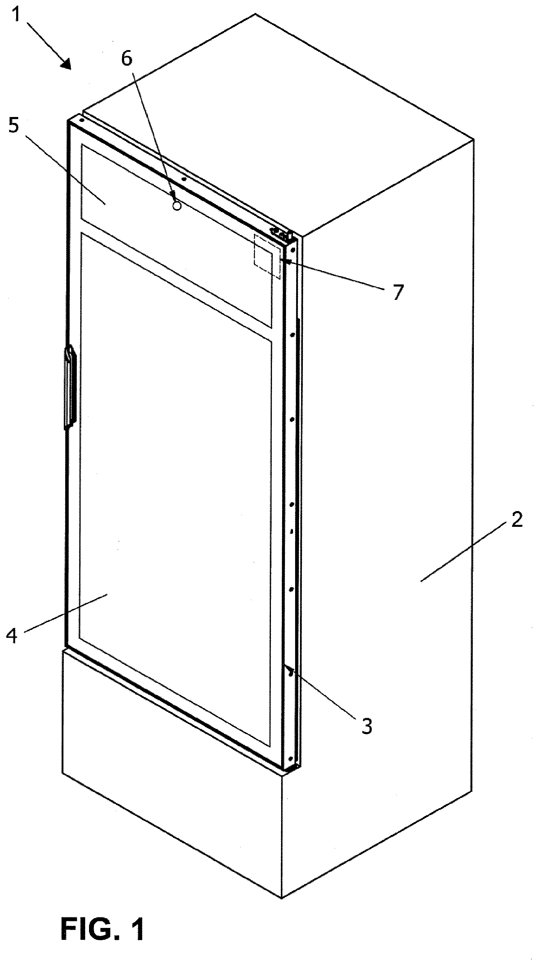

The refrigerator 1 illustrated in Figure 1 comprises a cabinet 2 closed at the front by a door 3, the latter divided into a transparent double-glazing part 4 and a part 5 formed by an opaque display (for example of the type with LCD, OLED technology and the like) for displaying multimedia content, such as images and commercial messages relating to products stored inside the refrigerator 1.

The door 3 is also equipped with a video camera 6, in turn communicating with electronics 7, for example a mini PC or similar, also located on the same door 3 or in another part of the cabinet 2 of the refrigerator.

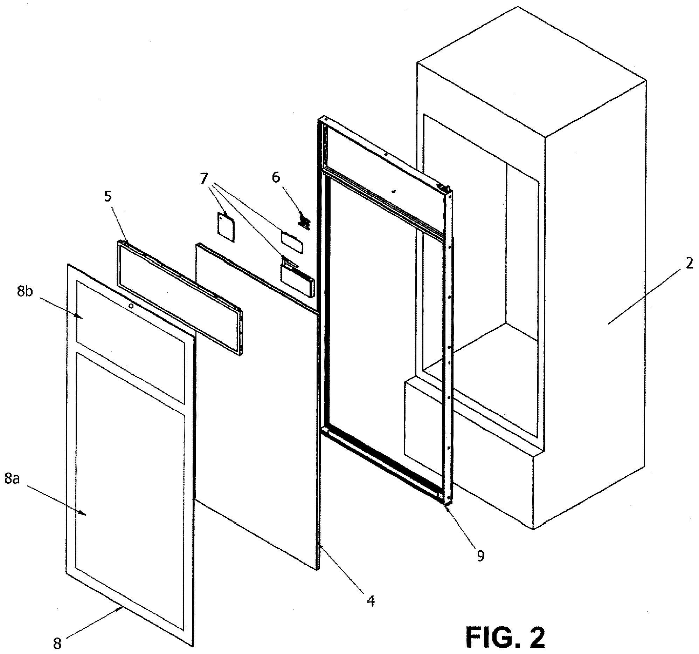

The exploded view of Figure 2 also shows the front sheet 8 made of silk-screened glass, divided into sectors 8a and 8b which cover respectively the double-glazing unit 4 and the display 5 of the refrigerator door. The whole formed by the sheet 8, the double-glazing unit 4, the display 5, the video camera 6 and the electronics 7 is assembled inside the frame 9 of the door 3.

According to the invention, while the double-glazing unit 4 performs exclusively the traditional function of protecting the products stored inside the refrigerator, while leaving them free to be seen, the display 5 reproduces images and advertising messages on the items offered for sale, chosen according to the user type (by gender, age, mood and more) as detected by the video camera 6. This information is finally processed by the electronics 7, so as to stimulate the customer to purchase the products closest to his/her preferences and tastes.

Thus, for example, if the video camera 6 detects that a young female has approached the refrigerator 1, the display 5 will show the multimedia contents of the products present in the refrigerator, specifically with regard to the expected preferences of that person. If, on the other hand, the latter is an elderly male, the electronics 7, which has received the images from the video camera 6, will send the display 5 different multimedia content from the previous content and intended for this user.

Furthermore, all the data collected by the video camera 6 and electronics 7 are sent to the central server, which processes them for statistical purposes, in particular to send back useful information for a better understanding of the behavior and reactions of users to the multimedia communication they were sent through the display 5.

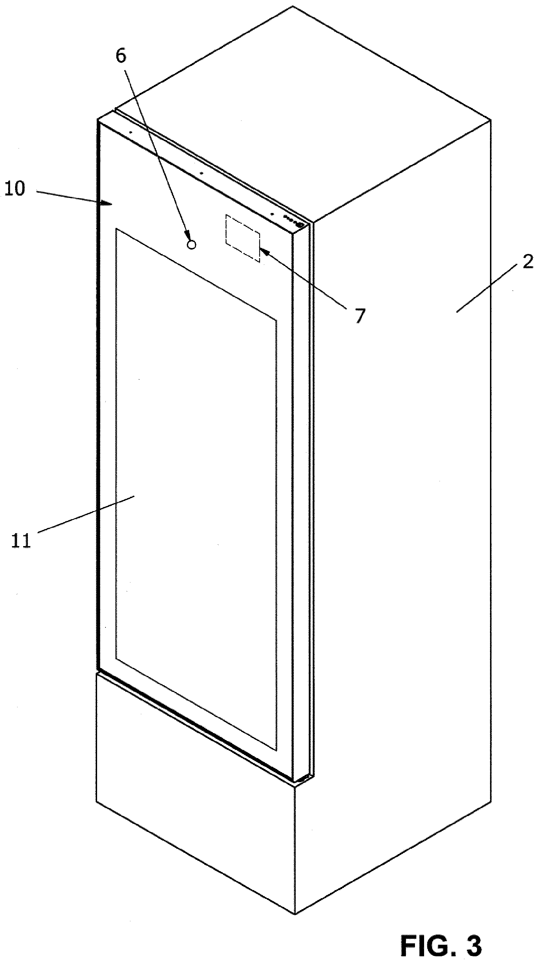

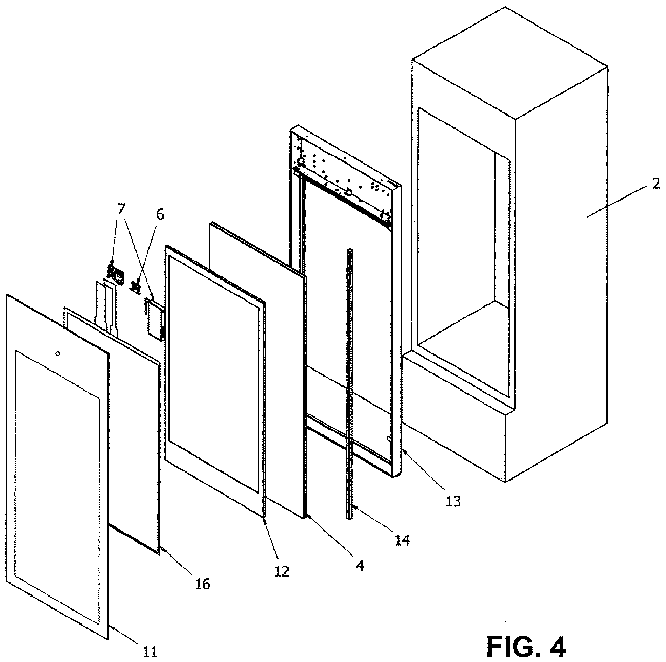

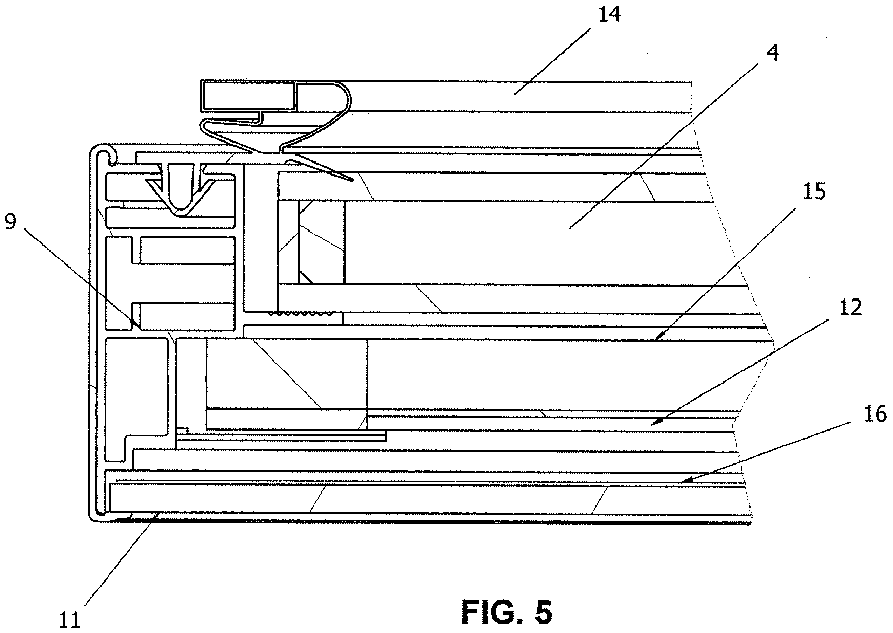

In the variant illustrated in Figure 3, the door 10 of the refrigerator of the invention bears a front sheet 11 of transparent silk-screened glass. In addition, as can be seen better in Figures 4 and 5, mounted behind the sheet 11 are a transparent display 12, of the type with LCD, OLED technology or similar, for example, a transparent double-glazing unit 4, a video camera 6 and electronics 7, in particular a mini PC. The whole is contained within the frame 13 of the door 10.

According to the invention, backlighting 14 is provided behind the double-glazing unit 4 and inside the cabinet 2 of the refrigerator of Figures 4 and 5, formed, for example, by a bar of LED lights, in addition to that of the refrigerator (not shown). In this way the backlighting of the display 12 is increased, which makes it transparent when the images formed on it have a white color background. The display 12 can then switch from an opaque mode, thanks to which the images sent by the electronics 7 are formed on it, to a transparent mode that allows the purchaser to view the products stored inside the cabinet 2 of the refrigerator.

Furthermore, between the transparent display 12 and the double-glazing unit 4 of the refrigerator of Figures 4 and 5, backlighting panels 15 can be inserted, which turn off when the user approaches, as detected by the video camera 6 and controlled by the electronics 7. In this way the functionality of the display 12 of the door 10 can be automatically converted from the opaque advertising mode to the transparent mode for inspecting the inside of the refrigerator.

Finally, on the surface of the sheet 8, 11 facing towards the inside of the refrigerator of the preceding figures, a touch film 16 can be applied, connected to the electronics 7 and suitable for giving the refrigerator door 10 capabilities for interactive dialog with the user.

Changes may be made to the invention, as described above and illustrated in the figures of the attached drawing sheets, in order to produce further variants which still fall within the scope of the following claims. Thus, for instance, the apparatus of the invention could be constituted by an automatic vending machine for electronic products, articles for smokers and more. The video camera 6 and the electronics 7 could be placed in another useful location in the body of the apparatus.

## Claims

1. Apparatus for the display and distribution of products in general, of the type comprising a cabinet (2) for containing said products displayed for sale, equipped with a closing door (3,10) provided with a display (5,12) and a double-glazing unit (4), **characterized in that** it also comprises a video camera (6) for transmitting to electronics (7) user data detected by the same video camera (6), said electronics (7) sending to the aforementioned display (5,12) a specific multimedia content, formulated on the basis of the said data detection performed by the video camera (6).

2. Apparatus according to claim 1, **characterized in that** said door (3) has a transparent front sheet (8), divided into sectors (8a,8b) which cover respectively said transparent double-glazing unit (4) and said opaque display (5), said door (3) comprising a frame (9) for containing and fixing said components.

3. Apparatus according to claim 1, **characterized in that** the aforementioned door (10) has a transparent front sheet (11) which covers said display (12), the same door (10) further comprising said transparent double-glazing unit (4) and a frame (13) for containing and fixing the aforementioned components.

4. Apparatus according to claim 3, **characterized in that** it comprises backlighting (14) to increase the color rendering of said display (12).

5. Apparatus according to claim 3, **characterized in that** said display (12) is of the type suitable for operating both in opaque mode and in transparent mode, for displaying respectively multimedia content on the display (12) and the products placed inside said apparatus.

6. Apparatus according to claim 3, **characterized in that** it comprises backlighting panels (15) arranged between said display (12) and said double-glazing unit (4), said backlighting panels (15) turning off when a user approaches as detected by the video camera 6 and under the control of the electronics 7, so as to convert the functionality of said display (12) from the opaque mode for advertising to the transparent mode for inspecting the inside of the apparatus.

7. Apparatus according to claim 1, **characterized in that** it further comprises a touch film (16), connected to said electronics (7) to provide said door (3,10) with capabilities for interaction with the user.

8. Apparatus according to one or more of claims 1 to 7, **characterized in that** it is a refrigerator, which the customer uses by opening the door and manually picking up the products.

9. Apparatus according to one or more of claims 1 to 7, **characterized in that** it is a vending machine, in which the distribution of the products chosen by the customer is carried out automatically.
